# EUROPÄISCHE PATENTSCHRIFT

(11) **EP 2 414 202 B1**
(45) Veröffentlichungstag und Bekanntmachung des Hinweises auf die Patenterteilung: **24.10.2018**
(21) Anmeldenummer: 10710285.7
(22) Anmeldetag: 18.03.2010
(51) Int. Cl.: B60T 7/04, B60T 11/18, B60T 13/68

(54) **BREMSBETÄTIGUNGSEINHEIT ZUR BETÄTIGUNG EINER KRAFTFAHRZEUGBREMSANLAGE VOM TYP "BRAKE-BY-WIRE"**
BRAKE ACTUATOR FOR A BRAKE-BY WIRE VEHICLE BRAKE SYSTEM
ACTIONNEUR DE FREIN POUR SYSTEME DE FREINAGE DE VEHICHULE DE TYPE "BRAKE-BY-WIRE"

(30) Priorität: 02.04.2009 DE 102009002156; 15.03.2010 DE 102010002848
(43) Veröffentlichungstag der Anmeldung: 08.02.2012
(73) Patentinhaber: Continental Teves AG & Co. OHG, 60488 Frankfurt am Main (DE)
(72) Erfinder: SELLINGER, Thomas, 63073 Offenbach (DE); DROTT, Peter, 65936 Frankfurt (DE); KRÄMER, Horst, 65462 Ginsheim-Gustavsburg (DE)
(86) Internationale Anmeldenummer: PCT/EP2010/053510
(87) Internationale Veröffentlichungsnummer: WO 2010/112344

(56) Entgegenhaltungen:
- WO-A1-01/53135
- WO-A1-2004/005095
- WO-A2-2009/016040
- DE-A1-102007 016 975

## Beschreibung

Die Erfindung betrifft eine Bremsbetätigungseinheit zur Betätigung einer Kraftfahrzeugbremsanlage vom Typ "Brake-by-wire", mit einem sowohl mittels eines Bremspedals als auch mittels einer elektronischen Steuereinheit fahrerwunschabhängig betätigbaren Bremskraftverstärker mit einer Kolbenstange, einem dem Bremskraftverstärker nachgeschalteten Hauptbremszylinder, Mitteln zum Erfassen eines Fahrerverzögerungswunsches, sowie einem mit dem Bremspedal zusammenwirkenden, zu der Kolbenstange parallel geschalteten Pedalwegsimulator, durch den in der Betriebsart "Brake-by-wire" eine auf das Bremspedal wirkende Rückstellkraft unabhängig von einer Betätigung des Bremskraftverstärkers simulierbar ist, wobei zur Entkopplung einer kraftübertragenden Verbindung zwischen dem Bremspedal und dem Bremskraftverstärker in der Betriebsart "Brake-by-wire" zwischen dem Bremspedal bzw. einem dem Bremspedal zugeordneten Bauteil und einem im Kraftfluss nachgeschalteten, dem Bremskraftverstärker zugeordneten Bauteil ein Abstand vorgesehen ist, um das Bremspedal in der Betriebsart "Brake-by-wire" von Rückwirkungskräften der Kraftfahrzeugbremsanlage zu entkoppeln, und wobei Mittel zu automatischen Reduktion des Abstandes außerhalb der Betriebsart "Brake-by-wire" vorgesehen sind.

Aus WO 2009/016040 A2 ist ein Bremssystem vom Typ "Brake-by-wire" mit einem mit dem Bremspedal zusammenwirkendem Pedalwegsimulator bekannt, wobei der Pedalwegsimulator über ein Dämpfungselement verfügt, welches entweder ortsfest angeordnet ist und mit einer mit dem Bremspedal verbundenen elektrohydraulischen Einrichtung zusammenwirkt oder mit dem Bremspedal verbunden ist und mit einer ortsfest angeordneten elektrohydraulischen Einrichtung zusammenwirkt.

Eine weitere Bremsbetätigungseinheit ist aus der WO 2004/005095 A1 bekannt und findet verbreitet Anwendung in modernen Kraftfahrzeugen mit Hybridantrieb. Die Entkopplung zwischen dem Bremspedal und dem Bremskraftverstärker in der Betriebsart "Brake-by-wire" wird hierbei durch eine Lücke bzw. einen Abstand zwischen einem dem Bremspedal zugeordneten Bauteil und einem dem Bremskraftverstärker zugeordneten Bauteil realisiert. Diese Lücke ist in der Regel derart definiert, dass bei einer Verzögerung bis z.B. 0,3g das Bremspedal nur mit Hilfe des Generators betätigt werden kann, ohne dass das Bremspedal den Bremskraftverstärker betätigt. Damit beim Aufbau des Bremsdruckes beim Übergang von der Betriebsart "Brake-by-wire" zu einer durch die Muskelkraft des Fahrzeugführers durchgeführten Betätigung keine Verzögerung entsteht, wird im genannten Stand der Technik vorgeschlagen, beim Übergang von der Betriebsart "Brake-by-wire" zu einer durch die Muskelkraft des Fahrzeugführers durchgeführten Betätigung den vorhin erwähnten Abstand automatisch reduzieren. Die genannten Mittel umfassen einen im Bremskraftverstärker angeordneten elektromagnetischen Aktuator, der mit einem blockförmigen Körper zusammen wirkt, der bei Bedarf den Abstand zwischen den zwei Bauteilen der Kolbenstange formschlüssig überbrückt. Die Anordnung der Mittel innerhalb des Bremskraftverstärkers wird als aufwendig angesehen, da eine Änderung der Bremskraftverstärkerkonstruktion erforderlich ist.

Es ist daher Aufgabe der vorliegenden Erfindung, eine dahingehend verbesserte Bremsbetätigungseinheit vorzuschlagen.

Diese Aufgabe wird erfindungsgemäß dadurch gelöst, dass als Mittel zur automatischen Reduktion des Abstandes eine hydraulische Einheit mit einem ersten und einem zweiten hydraulischen Raum vorgesehen ist, wobei eine Verbindung zwischen den beiden Räumen durch ein stromlos geschlossenes Ventil absperrbar ist und der erste hydraulische Raum durch einen Kolben begrenzt ist, welcher mit der Kolbenstange zusammenwirkt, so dass der Abstand a durch einen Hub des Kolbens gebildet wird. Die hydraulische Einheit kann als kompaktes Bauteil auch nachträglich in vorhandene Bremsbetätigungseinheiten integriert werden.

Gemäß einer vorteilhaften Ausführungsform der Erfindung liegt die Kolbenstange in der Betriebsart "Brake-by-wire" an dem Kolben an. Damit kann die Einstellmaßeinstellung zwischen dem Bremskraftverstärker und der Pedaleinheit entschärft werden.

Vorzugsweise ist zur Führung eines Endes der Kolbenstange eine trichterförmige, in Richtung der Kolbenstange ausgerichtete Aufnahme vorgesehen, welche in einer, den ersten hydraulischen Raum bildenden Ausnehmung einen Gehäuses der hydraulischen Einheit befestigt ist.

Zur einfachen Befestigung weist die trichterförmige Aufnahme vorzugsweise einen axialen Schlitz und ein radialen Vorsprung aufweist, wobei der Vorsprung unter Federspannung in einer Innennut der Innenwand der Ausnehmung gehalten wird.

Eine andere vorteilhafte Ausführung der Erfindung sieht vor, dass ein Ende der Kolbenstange an dem Kolben des ersten hydraulischen Raumes befestigt ist. Der Kolben wird dadurch stetig von der Kolbenstange mitgenommen, so dass keine Kraftsprünge entstehen.

Vorzugsweise ist das Ende mittels eines Schnappverschlusses an dem Kolben befestigbar. Die Montage kann dadurch vereinfacht werden.

Ein einfacher Aufbau der hydraulischen Einheit wird dadurch erreicht, dass der zweite hydraulische Raum durch einen elastischen Kunststoffdeckel begrenzt ist.

Gemäß einer anderen, vorteilhaften Ausführungsform ist der zweite hydraulische Raum durch einen federdruckbeaufschlagten Kolben begrenzt.

Weitere Merkmale und Vorteile der Erfindung werden in der nachfolgenden Beschreibung unter Bezugnahme auf die beiliegenden Zeichnungen an zwei Ausführungsbeispielen näher erläutert. In den Zeichnungen zeigen schematisch:
- Fig. 1: eine Bremsbetätigungseinheit eines ersten Ausführungsbeispiels in räumlicher Darstellung;
- Fig. 2: ein vergrößerter Ausschnitt der Bremsbetätigungseinheit gemäß Fig. 1 teilweise geschnitten und
- Fig. 3: ein vergrößerter Ausschnitt einer Bremsbetätigungseinheit eines zweiten Ausführungsbeispiels teilweise geschnitten.

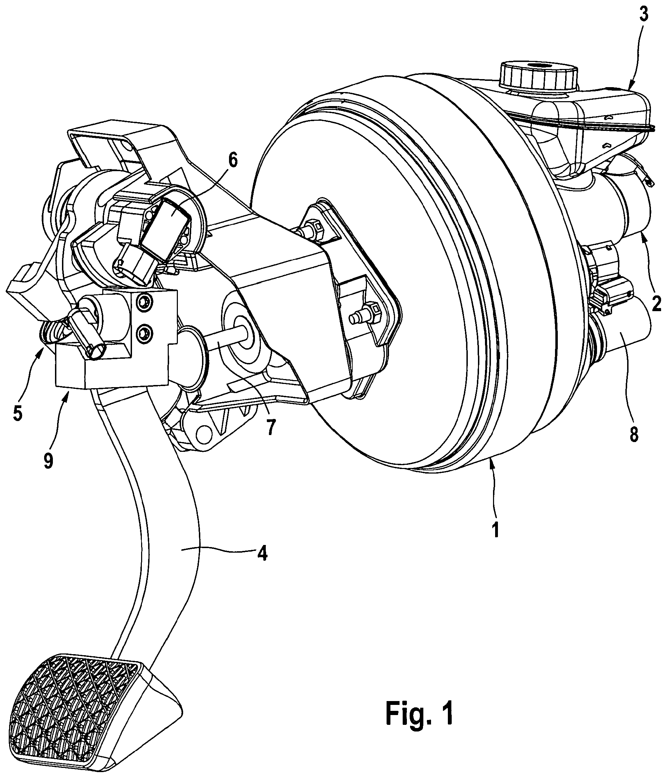

Die in Fig. 1 räumlich dargestellte Betätigungseinheit eines ersten Ausführungsbeispiels besteht aus einem Bremskraftverstärker 1, vorzugsweise einem Unterdruckbremskraftverstärker, einem dem Bremskraftverstärker 1 nachgeschalteten Hauptbremszylinder 2, vorzugsweise einem Tandemhauptzylinder, an dessen nicht dargestellte Druckräume unter Zwischenschaltung einer ebenfalls nicht dargestellten hydraulischen Steuer- und Regeleinheit Radbremsen des Kraftfahrzeuges angeschlossen sind, sowie einem dem Hauptbremszylinder 2 zugeordneten Druckmittelvorratsbehälter 3. Der Betätigung des Bremskraftverstärkers 1 durch den Fahrer dient ein Bremspedal 4, wobei ein mit dem Bremspedal 4 insbesondere in der Betriebsart "Brake-by-wire" zusammenwirkender, zu einer Kolbenstange 7 des Bremskraftverstärkers 1 parallel geschalteten Pedalwegsimulator 5 vorgesehen ist, der dem Fahrer das gewöhnliche Bremspedalgefühl vermittelt und durch den in der Betriebsart "Brake-by-wire" eine auf das Bremspedal 4 wirkende Rückstellkraft unabhängig von einer Betätigung des Bremskraftverstärkers 1 simulierbar ist. Ein Fahrerverzögerungswunsch bzw. der Betätigungsweg des Bremspedals 4 wird mittels mindestens einer Sensoreinrichtung 6 erfasst, deren Signale einer nicht gezeigten elektronischen Steuereinheit zugeführt werden. Durch die Ausgangssignale der elektronischen Steuereinheit ist u. a. ein dem Bremskraftverstärker 1 zugeordneter Elektromagnet ansteuerbar, der eine vom Fahrerwillen unabhängige Betätigung eines pneumatischen Steuerventils ermöglicht, das eine Luftzufuhr zum Bremskraftverstärker 1 steuert. Die Kolbenstange 7 des Bremskraftverstärkers 1 als Eingangsglied dient der Betätigung des Steuerventils durch den Fahrer.

Zur Entkopplung einer kraftübertragenden Verbindung zwischen dem Bremspedal 4 und dem Bremskraftverstärker 1 in der Betriebsart "Brake-by-wire" ist zwischen dem Bremspedal 4 bzw. einem dem Bremspedal 4 zugeordneten Bauteil und einem im Kraftfluss nachgeschalteten, dem Bremskraftverstärker 1 zugeordneten Bauteil ein nachstehend näher erläuterter Abstand a vorgesehen.

Ein Wegsensor 8 dient der Erfassung des Weges einer die Verstärkungskraft des Bremskraftverstärkers 1 aufbringenden beweglichen Wand bzw. des Weges eines Ausgangsglieds des Bremskraftverstärkers 1, das seine Ausgangskraft auf einen nicht dargestellten ersten Kolben des Hauptbremszylinders 2 überträgt.

Der erwähnte Abstand a zwischen dem Bremspedal 4 bzw. einem dem Bremspedal 4 zugeordneten Bauteil und einem im Kraftfluss nachgeschalteten, dem Bremskraftverstärker 1 zugeordneten Bauteil ist in der Regel derart definiert, dass bei einer Verzögerung bis z.B. 0,3g das Bremspedal 4 nur mit Hilfe des Generators betätigt werden kann, ohne dass das Bremspedal 4 den Bremskraftverstärker 1 betätigt. Damit beim Aufbau des Bremsdruckes beim Übergang von der Betriebsart "Brake-by-wire" zu einer durch die Muskelkraft des Fahrzeugführers durchgeführten Betätigung keine Verzögerung entsteht, weist die Bremsbetätigungseinheit Mittel 9 zu automatischen Reduktion des Abstandes a außerhalb der Betriebsart "Brake-by-wire" auf.

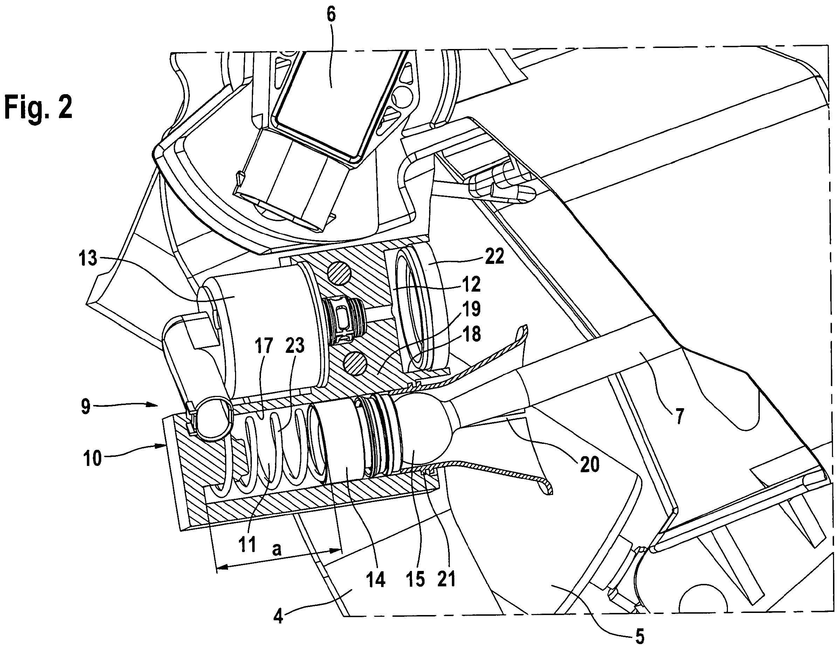

Fig. 2 zeigt einen vergrößerten, teilweise geschnittenen Ausschnitt der Bremsbetätigungseinheit gemäß Fig. 1. Hieraus wird ersichtlich, dass die Mittel 9 zur automatischen Reduktion des Abstandes a am Bremspedal 4 angeordnet sind. Da die Mittel 9 außerhalb des Bremskraftverstärkers 1 vorgesehen sind, kann eine entsprechende Änderung des Bremskraftverstärkers 1, die aufwendig und kostenintensiv ist, entfallen.

Als Mittel 9 zur automatischen Reduktion des Abstandes a ist eine hydraulische Einheit 10 mit einem ersten und einem zweiten hydraulischen Raum 11, 12 vorgesehen. Eine nicht dargestellte Verbindung zwischen den beiden Räumen 11, 12 ist durch ein stromlos geschlossenes Ventil 13 absperrbar. In der Betriebsart "Brake-by-wire" ist das Ventil 13 bestromt und eine Verbindung zwischen den Räume 11, 12 offen, welche durch einseitig offene Ausnehmungen 17, 18 eines Gehäuses 19 der hydraulischen Einheit 10 gebildet sind.

Wie aus Fig. 2 ersichtlich ist, ist der erste hydraulische Raum 11 durch einen federbeaufschlagten Kolben 14 begrenzt, welcher mit der Kolbenstange 7 zusammenwirkt, so dass der Abstand a durch einen Hub des Kolbens 14 gebildet wird.

Die Kolbenstange 7 bzw. deren Ende 15 - hier in Form eines Kugelkopfes - liegt insbesondere in der Betriebsart "Brake-by-wire" an dem Kolben 14 an, so dass damit die Einstellmaßeinstellung zwischen dem Bremskraftverstärker 1 und dem Bremspedal 4 als Teil einer Pedaleinheit entschärft werden kann.

Zur Führung des Endes 15 der Kolbenstange 7 ist eine trichterförmige, in Richtung der Kolbenstange 7 ausgerichtete Aufnahme 16 vorgesehen, welche in der Ausnehmung 17 befestigt ist. Die Aufnahme 16 dient zum einen der Führung des Endes 15 der Kolbenstange 7 während der Montage der Pedaleinheit mit dem Bremskraftverstärker 1. Zum anderen wird die Kolbenstange 7 nach Verbindung mit dem Bremspedal 4 durch die Aufnahme 16 geführt.

Zur einfachen Befestigung weist die trichterförmige Aufnahme 16 einen axialen Schlitz 20 und ein radialen Vorsprung 21 aufweist, wobei der Vorsprung unter Federspannung in einer Innennut der Ausnehmung 17 gehalten wird.

Ferner ist aus Fig. 2 ersichtlich, dass der zweite hydraulische Raum 12 durch einen elastischen Kunststoffdeckel 22 begrenzt ist.
Im nachfolgenden wird die Funktionsweise der hydraulischen Einheit 10 beschrieben:
In der Betriebsart "Brake-by-wire" ist das Ventil 13 bestromt und eine Verbindung zwischen den Räume 11, 12 offen. Daher kann, wenn das Bremspedal 4 betätigt wird, das im ersten hydraulischen Raum 11 vorhandene hydraulische Druckmittel ungehindert in den zweiten hydraulischen Raum 12 fließen, so dass zwischen dem Bremspedal 4 und der Kolbenstange 7 des Bremskraftverstärkers 1 keine Kraftübertragung erfolgt. Der elastische Kunststoffdeckel 22 erlaubt eine begrenzte Ausdehnung des zweiten hydraulischen Raumes 12.
Bei Rücknahme der Bremsbetätigung kann das hydraulische Druckmittel vom zweiten hydraulischen Raum 12 in den ersten hydraulischen Raum 11 zurückfließen, da der Kolben 14 durch die Federbeaufschlagung einer Rückstellfeder 23 wieder in seine Ausgangsposition zurückgedrängt wird.

Wird der Bremskraftverstärker 1 infolge eines Bremsdruckregelvorganges wie ABS, ASR, ESP etc. unabhängig von einem Fahrerwunsch betätigt oder wird das Bremspedal 4 plötzlich losgelassen, kann der Kontakt zwischen Kolbenstange 7 und Kolben 14 unterbrochen werden, da das Ende 15 nicht am Kolben 14 befestigt ist, sondern nur daran anliegt.

Außerhalb der Betriebsart "Brake-by-wire", beispielsweise bei Ausfall der Elektrik, wird das Ventil 13 nicht mehr bestromt und die Verbindung zwischen den Räumen 11, 12 ist geschlossen. Das im ersten hydraulischen Raum 11 vorhandene hydraulische Druckmittel kann somit nicht mehr in den zweiten hydraulischen Raum 12 verdrängt werden, so dass zwischen dem Bremspedal 4 und der Kolbenstange 7 des Bremskraftverstärkers 1 eine Kraftübertragung erfolgt. Der Abstand a wird somit beim Übergang von der Betriebsart "Brake-by-wire" zu einer durch die Muskelkraft des Fahrzeugführers durchgeführten Betätigung automatisch ohne Verzögerung und Verlustweg reduziert bzw. komplett aufgehoben.

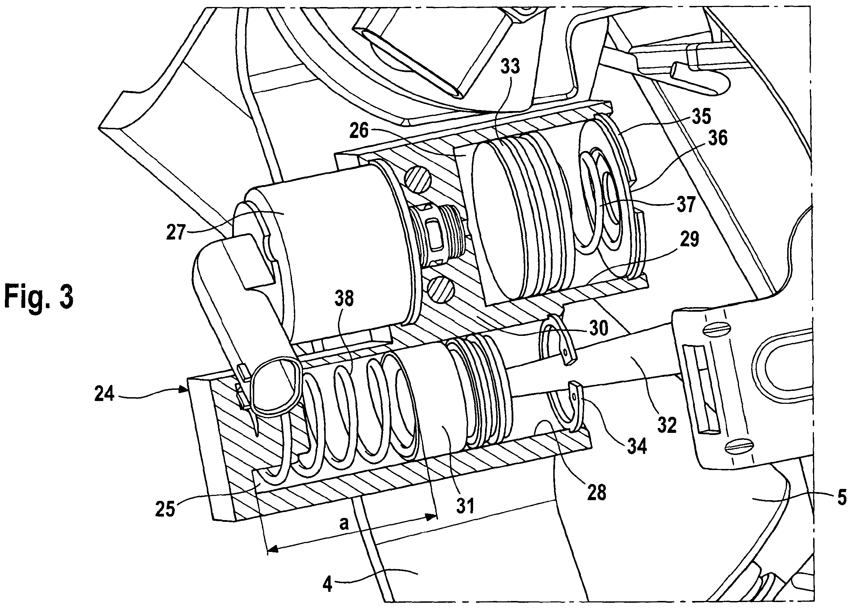

Fig. 3 zeigt einen vergrößerten, teilweise geschnittenen Ausschnitt eines zweiten Ausführungsbeispiels einer Bremsbetätigungseinheit. Diese unterscheidet sich nicht im grundsätzlichen Aufbau und in der grundsätzlichen Funktion zum ersten Ausführungsbeispiel, so dass lediglich auf die Unterschiede eingegangen wird.

Als Mittel 9 zur automatischen Reduktion des Abstandes a ist eine hydraulische Einheit 24 mit einem ersten und einem zweiten hydraulischen Raum 25,26 vorgesehen. Eine nicht dargestellte Verbindung zwischen den beiden Räumen 25,26 ist durch ein stromlos geschlossenes Ventil 27 absperrbar. In der Betriebsart "Brake-by-wire" ist das Ventil 27 bestromt und eine Verbindung zwischen den Räumen 25,26 offen, welche durch einseitig offene Ausnehmungen 28,29 eines Gehäuses 30 der hydraulischen Einheit 24 gebildet sind.

Wie auch zum ersten Ausführungsbeispiel gemäß Fig. 2, ist der erste hydraulische Raum 25 durch einen federbeaufschlagten Kolben 31 begrenzt, welcher mit einer Kolbenstange 32 des Bremskraftverstärkers 1 zusammenwirkt, so dass der Abstand a durch einen Hub des Kolbens 31 gebildet wird.

Ein nicht gezeigtes Ende der Kolbenstange 32 ist an dem Kolben 31 des ersten hydraulischen Raumes 25 beispielsweise mittels eines Schnappverschlusses befestigt, so dass der Kolben 31 stetig mit der Kolbenstange 32 mitgenommen wird, wodurch keine Kraftsprünge entstehen. Ein separates Führungselement kann dadurch entfallen.

Weiter ist der zweite hydraulische Raum 26 im Unterschied zum ersten Ausführungsbeispiel durch einen federdruckbeaufschlagten Kolben 33 begrenzt. Zur Sicherung der Kolben 31,33 ist in am Ende der Ausnehmungen 28,29 jeweils ein Sicherungselement 34,35 vorgesehen, wobei das Sicherungselement 35 des zweiten hydraulischen Raums 26 ein Anschlagelement 36 für die den Kolben 33 beaufschlagende Druckfeder 37 hält. Im Rahmen der Erfindung kann jedoch auch der Kunststoffdeckel 22 des ersten Ausführungsbeispiels zur Begrenzung des zweiten Raumes 26 verwendet werden und umgekehrt kann auch der federbeaufschlagte Kolben 33 bei dem ersten Ausführungsbeispiel eingesetzt werden.

Im nachfolgenden wird die Funktionsweise der hydraulischen Einheit 24 beschrieben:
In der Betriebsart "Brake-by-wire" ist das Ventil 27 bestromt und eine Verbindung zwischen den Räume 25,26 offen. Daher wird, wenn das Bremspedal 4 betätigt wird, das im ersten hydraulischen Raum 25 vorhandene hydraulische Druckmittel entgegen der Federkraft der Druckfeder 37 in den zweiten hydraulischen Raum 26 verschoben, so dass zwischen dem Bremspedal 4 und der Kolbenstange 32 des Bremskraftverstärkers 1 keine Kraftübertragung erfolgt. Bei Rücknahme der Bremsbetätigung kann das hydraulische Druckmittel vom zweiten hydraulischen Raum 26 in den ersten hydraulischen Raum 25 zurückfließen, da der Kolben 31 durch die Federbeaufschlagung einer Rückstellfeder 38 wieder in seine Ausgangsposition zurückgedrängt wird und die Druckfeder 37 des Kolbens 33 das Druckmittel aus dem zweiten hydraulischen Raum 26 herausdrängt.

Wird der Bremskraftverstärker 1 infolge eines Bremsdruckregelvorganges wie ABS, ASR, ESP etc. unabhängig von einem Fahrerwunsch betätigt oder wird das Bremspedal 4 plötzlich losgelassen, wird durch die Befestigung der Kolbenstange 32 an dem Kolben 31, der Kolben 31 mitgenommen.

Außerhalb der Betriebsart "Brake-by-wire", beispielsweise bei Ausfall der Elektrik, wird das Ventil 27 nicht mehr bestromt und die Verbindung zwischen den Räumen 25,26 ist geschlossen. Das im ersten hydraulischen Raum 25 vorhandene hydraulische Druckmittel kann somit nicht mehr in den zweiten hydraulischen Raum 26 verdrängt werden, so dass zwischen dem Bremspedal 4 und der Kolbenstange 32 des Bremskraftverstärkers 1 eine Kraftübertragung erfolgt. Der Abstand a wird so beim Übergang von der Betriebsart "Brake-by-wire" zu einer durch die Muskelkraft des Fahrzeugführers durchgeführten Betätigung automatisch ohne Verzögerung und Verlustweg reduziert bzw. komplett aufgehoben.

Die hydraulischen Einheiten 10,24 können als kompakte Baueinheiten auch nachträglich in vorhandene Bremsbetätigungseinheiten integriert werden.

### Bezugszeichenliste

- 1: Bremskraftverstärker
- 2: Hauptbremszylinder
- 3: Druckmittelvorratsbehälter
- 4: Bremspedal
- 5: Pedalwegsimulator
- 6: Sensoreinrichtung
- 7: Kolbenstange
- 8: Wegsensor
- 9: Mittel
- 10: Einheit
- 11: Raum
- 12: Raum
- 13: Ventil
- 14: Kolben
- 15: Ende
- 16: Aufnahme
- 17: Ausnehmung
- 18: Ausnehmung
- 19: Gehäuse
- 20: Schlitz
- 21: Vorsprung
- 22: Kunststoffdeckel
- 23: Rückstellfeder
- 24: Einheit
- 25: Raum
- 26: Raum
- 27: Ventil
- 28: Ausnehmung
- 29: Ausnehmung
- 30: Gehäuse
- 31: Kolben
- 32: Kolbenstange
- 33: Kolben
- 34: Sicherungselement
- 35: Sicherungselement
- 36: Anschlagelement
- 37: Druckfeder
- 38: Rückstellfeder

- a: Abstand

## Patentansprüche

1. Bremsbetätigungseinheit zur Betätigung einer Kraftfahrzeugbremsanlage vom Typ "Brake-by-wire", mit einem sowohl mittels eines Bremspedals (4) als auch mittels einer elektronischen Steuereinheit fahrerwunschabhängig betätigbaren Bremskraftverstärker (1) mit einer Kolbenstange (7;,32), einem dem Bremskraftverstärker (1) nachgeschalteten Hauptbremszylinder (2), Mitteln zum Erfassen eines Fahrerverzögerungswunsches (6), sowie einem mit dem Bremspedal (4) zusammenwirkenden, zu der Kolbenstange parallel geschalteten Pedalwegsimulator (5), durch den in der Betriebsart "Brake-by-wire" eine auf das Bremspedal (4) wirkende Rückstellkraft unabhängig von einer Betätigung des Bremskraftverstärkers (1) simulierbar ist, wobei zur Entkopplung einer kraftübertragenden Verbindung zwischen dem Bremspedal (4) und dem Bremskraftverstärker (1) in der Betriebsart "Brake-by-wire" zwischen dem Bremspedal (4) bzw. einem dem Bremspedal (4) zugeordneten Bauteil und einem im Kraftfluss nachgeschalteten, dem Bremskraftverstärker (1) zugeordneten Bauteil ein Abstand (a) vorgesehen ist, um das Bremspedal (4) in der Betriebsart "Brake-by-wire" von Rückwirkungskräften der Kraftfahrzeugbremsanlage zu entkoppeln, und wobei Mittel (9) zu automatischen Reduktion des Abstandes (a) außerhalb der Betriebsart "Brake-by-wire" vorgesehen sind, wobei die Mittel (9) zur automatischen Reduktion des Abstandes (a) am Bremspedal (4) angeordnet sind, **dadurch gekennzeichnet, dass** als Mittel (9) zur automatischen Reduktion des Abstandes (a) eine hydraulische Einheit (10;24) mit einem ersten und einem zweiten hydraulischen Raum (11,12;25,26) vorgesehen ist, wobei eine Verbindung zwischen den beiden Räumen (11,12;25,26) durch ein stromlos geschlossenes Ventil (13;27) absperrbar ist und der erste hydraulische Raum (11;25) durch einen Kolben (14;31) begrenzt ist, welcher mit der Kolbenstange (7;32) zusammenwirkt, so dass der Abstand (a) durch einen Hub des Kolbens (14;31) gebildet wird.

2. Bremsbetätigungseinheit nach Anspruch 1, **dadurch gekennzeichnet, dass** die Kolbenstange (7) in der Betriebsart "Brake-by-wire" an dem Kolben (14) anliegt.

3. Bremsbetätigungseinheit nach Anspruch 2, **dadurch gekennzeichnet, dass** zur Führung eines Endes (14) der Kolbenstange (7) eine trichterförmige, in Richtung der Kolbenstange (7) ausgerichtete Aufnahme (16) vorgesehen ist, welche in einer, den ersten hydraulischen Raum (11) bildenden Ausnehmung (17) einen Gehäuses (19) der hydraulischen Einheit (10) befestigt ist.

4. Bremsbetätigungseinheit nach Anspruch 3, **dadurch gekennzeichnet, dass** die trichterförmige Aufnahme (16) einen axialen Schlitz (20) und ein radialen Vorsprung (21) aufweist, wobei der Vorsprung (21) unter Federspannung in einer Innennut der Ausnehmung (17) gehalten wird.

5. Bremsbetätigungseinheit nach Anspruch 1, **dadurch gekennzeichnet, dass** ein Ende der Kolbenstange (32) an dem Kolben (31) des ersten hydraulischen Raumes (25) befestigt ist.

6. Bremsbetätigungseinheit nach Anspruch 5, **dadurch gekennzeichnet, dass** das Ende mittels eines Schnappverschlusses an dem Kolben (31) befestigbar ist.

7. Bremsbetätigungseinheit nach einem der vorangegangenen Ansprüche 1 bis 6, **dadurch gekennzeichnet, dass** der zweite hydraulische Raum (12) durch einen elastischen Kunststoffdeckel (22) begrenzt ist.

8. Bremsbetätigungseinheit nach einem der vorangegangenen Ansprüche 1 bis 6, **dadurch gekennzeichnet, dass** der zweite hydraulische Raum (26) durch einen federdruckbeaufschlagten Kolben (33) begrenzt ist.

## Claims

1. Brake actuator unit for actuating a motor vehicle braking system of the "brake-by-wire" type, having a brake booster (1) which can be actuated both by means of a brake pedal (4) and by means of an electronic control unit as a function of a driver's request and has a piston rod (7;32), a master brake cylinder (2) arranged downstream of the brake booster (1), means for registering a driver deceleration request (6), and a pedal travel simulator (5) which interacts with the brake pedal (4) and is arranged in parallel with the piston rod and by means of which, in the "brake-by-wire" operating mode, a restoring force acting on the brake pedal (4) can be simulated independently of actuation of the brake booster (1),
wherein, in order to decouple a force-transmitting connection between the brake pedal (4) and the brake booster (1) in the "brake-by-wire" operating mode, a distance (a) is provided between the brake pedal (4) or a component assigned to the brake pedal (4) and a component arranged downstream in the force flux and assigned to the brake booster (1), in order to decouple the brake pedal (4) from reactive forces of the motor vehicle braking system in the "brake-by-wire" operating mode, and wherein means (9) are provided for automatically reducing the distance (a) outside the "brake-by-wire" operating mode, wherein the means (9) for automatically reducing the distance (a) are arranged on the brake pedal (4), **characterized in that** a hydraulic unit (10;24) having a first and a second hydraulic space (11,12;25,26) is provided as means (9) for automatically reducing the distance (a), wherein a connection between the two spaces (11,12;25,26) can be shut off by a valve (13;27) which is closed in the currentless state, and the first hydraulic space (11;25) is bounded by a piston (14;31) which interacts with the piston rod (7;32), with the result that the distance (a) is formed by a stroke of the piston (14;31).

2. Brake actuator unit according to Claim 1, **characterized in that** in the "brake-by-wire" operating mode the piston rod (7) bears against the piston (14).

3. Brake actuator unit according to Claim 2, **characterized in that**, in order to guide an end (14) of the piston rod (7), a funnel-shaped receptacle (16) which is oriented in the direction of the piston rod (7) is provided, which receptacle (16) is attached in a recess (17), forming the first hydraulic space (11), of a housing (19) of the hydraulic unit (10).

4. Brake actuator unit according to Claim 3, **characterized in that** the funnel-shaped receptacle (16) has an axial slot (20) and a radial projection (21), wherein the projection (21) is held in an internal groove in the recess (17) under spring stress.

5. Brake actuator unit according to Claim 1, **characterized in that** one end of the piston rod (32) is attached to the piston (31) of the first hydraulic space (25).

6. Brake actuator unit according to Claim 5, **characterized in that** the end can be attached to the piston (31) by means of a snap-action locking mechanism.

7. Brake actuator unit according to one of the preceding Claims 1 to 6, **characterized in that** the second hydraulic space (12) is bounded by an elastic plastic cover (22).

8. Brake actuator unit according to one of the preceding Claims 1 to 6, **characterized in that** the second hydraulic space (26) is bounded by a spring-pressure-loaded piston (33).

## Revendications

1. Unité d'actionnement de frein pour l'actionnement d'un système de freinage de véhicule automobile du type "Brake-by-wire", avec un servofrein (1) actionnable selon le souhait du conducteur aussi bien au moyen d'une pédale de frein (4) qu'au moyen d'une unité de commande électronique avec une tige de piston (7; 32), avec un maître-cylindre (2) disposé après le servofrein (1), des moyens pour détecter un souhait de ralentissement du conducteur (6), ainsi qu'un simulateur de course de pédale (5) monté en parallèle avec la tige de piston et coopérant avec la pédale de frein (4), par lequel dans le mode de fonctionnement "Brake-by-wire" une force de rappel agissant sur la pédale de frein (4) peut être simulée indépendamment d'un actionnement du servofrein (1), dans laquelle pour déconnecter une liaison de transmission de force entre la pédale de frein (4) et le servofrein (1) dans le mode de fonctionnement "Brake-by-wire" il est prévu entre la pédale de frein (4) ou un composant associé à la pédale de frein (4) et un composant associé au servofrein (1) et disposé en aval dans le flux de force une distance (a) destinée à déconnecter la pédale de frein (4) dans le mode de fonctionnement "Brake-by-wire" de forces de rappel du système de freinage de véhicule automobile, et dans laquelle il est prévu des moyens (9) pour la réduction automatique de la distance (a) en dehors du mode de fonctionnement "Brake-by-wire", dans laquelle les moyens (9) pour la réduction automatique de la distance (a) sont disposés sur la pédale de frein (4), **caractérisée en ce qu'**il est prévu comme moyens (9) pour la réduction automatique de la distance (a) une unité hydraulique (10; 24) avec une première et une deuxième chambres hydrauliques (11, 12; 25, 26), dans laquelle une liaison entre les deux chambres (11, 12; 25, 26) peut être fermée par une soupape fermée sans courant (13; 27) et la première chambre hydraulique (11; 25) est limitée par un piston (14; 31), qui coopère avec la tige de piston (7; 32), de telle manière que la distance (a) soit formée par une course du piston (14; 31).

2. Unité d'actionnement de frein selon la revendication 1, **caractérisée en ce que** la tige de piston (7) s'applique sur le piston (14) dans le mode de fonctionnement "Brake-by-wire".

3. Unité d'actionnement de frein selon la revendication 2, **caractérisée en ce qu'**il est prévu pour le guidage d'une extrémité (14) de la tige de piston (7) un logement en forme d'entonnoir (16) orienté dans la direction de la tige de piston (7), qui est fixé dans un évidement (17) d'un boîtier (19) de l'unité hydraulique (10), formant la première chambre hydraulique (11).

4. Unité d'actionnement de frein selon la revendication 3, **caractérisée en ce que** le logement en forme d'entonnoir (16) présente une fente axiale (20) et une saillie radiale (21), dans laquelle la saillie (21) est maintenue dans une rainure intérieure de l'évidement (17) sous une tension de ressort.

5. Unité d'actionnement de frein selon la revendication 1, **caractérisée en ce qu'**une extrémité de la tige de piston (32) est fixée au piston (31) de la première chambre hydraulique (25).

6. Unité d'actionnement de frein selon la revendication 5, **caractérisée en ce que** l'extrémité peut être fixée au piston (31) au moyen d'une fermeture à déclic.

7. Unité d'actionnement de frein selon l'une quelconque des revendications précédentes 1 à 6, **caractérisée en ce que** la deuxième chambre hydraulique (12) est limitée par un couvercle élastique en matière plastique (22).

8. Unité d'actionnement de frein selon l'une quelconque des revendications précédentes 1 à 6, **caractérisée en ce que** la deuxième chambre hydraulique (26) est limitée par un piston (33) pouvant être soumis à une pression de ressort.
